Europäisches Patentamt

European Patent Office

Office européen des brevets

(11) Veröffentlichungsnummer: **0 285 750**
**A2**

(12) **EUROPÄISCHE PATENTANMELDUNG**

(21) Anmeldenummer: 88100718.1

(22) Anmeldetag: 20.01.88

(51) Int. Cl.⁴: **A23L 1/28**

(30) Priorität: 19.03.87 DE 3708932

(43) Veröffentlichungstag der Anmeldung:
12.10.88 Patentblatt 88/41

(84) Benannte Vertragsstaaten:
AT BE CH DE FR GB LI NL

(71) Anmelder: HÜLS AKTIENGESELLSCHAFT
Patentabteilung / PB 15 - Postfach 13 20
D-4370 Marl 1(DE)

(72) Erfinder: Schindler, Fritz, Dr.
Am Stadtgarten 1/1959
D-4650 Gelsenkirchen(DE)

(54) **Verfahren zur Herstellung von Pilzaroma in Pilzzellmassen.**

(57) Pilzaromen werden bisher fast ausschließlich mit Hilfe von getrockneten Pilzen oder von Pilzextrakten aus Pilzfruchtkörpern hergestellt. Produkte aus fermentativ gezüchtetem Pilzmyzel haben bisher nur geringe Gehalte an 1-Octen-3-ol.

Erfindungsgemäß wird fermentativ gezüchtetes Pilzmyzel in Gegenwart von Luft mechanisch behandelt, worauf nach bekannten Methoden konzentriert wird.

Man erhält Pilzaromen in Pilzzellmassen mit einem hohen Gehalt an 1-Octen-3-ol, die gut für den Einsatz in Pilzsuppen oder Pilzsaucen geeignet sind.

EP 0 285 750 A2

## Verfahren zur Herstellung von Pilzaroma in Pilzzellmassen

Die Erfindung betrifft ein Verfahren zur Herstellung von Pilzaroma in Pilzzellmassen aus fermentativ gezüchteten Speisepilzen. Dabei zeichnen sich die Pilzzellmassen durch einen hohen Gehalt an 1-Octen-3-ol aus.

1-Octen-3-ol ist die wesentliche Aromakomponente, die den Speisepilzen ihren pilztypischen Geschmack verleiht. Chemische Verfahren liefern diese Verbindung als Racemat. Das Naturprodukt, das den intensiveren Pilzgeschmack besitzt, ist jedoch nur das linksdrehende Enantiomer (J. Agric. Food Chem. 30, 1982, 89-93).

In der Lebensmittelindustrie besteht ein großer Bedarf an natürlichem Pilzaroma, das beispielsweise für die Herstellung von Fertigsuppen oder Fertigsaucen verwendet wird. Dieser Bedarf wird heute hauptsächlich durch getrocknete oder geriebene Pilze gedeckt. Pilzextrakte und Pilzkonzentrate, die ebenfalls eingesetzt werden, werden fast ausschließlich aus gesammelten Waldpilzen oder aus gezüchteten Kulturpilzen, wie zum Beispiel Champignons, hergestellt. Nach Bötticher Technologie der Pilzverarbeitung 1974, 155-157, handelt es sich bei diesen Produkten um mehr oder weniger eingedickte Preßsäfte von Pilzfruchtkörpern.

Von M. Wurzenberger und W. Grosch, Zeitschrift für Lebensmittel-Untersuchung und -Forschung 1983, 16-19, wird 1-Octen-3-ol in Kulturchampignons quantitativ bestimmt. 1-Octen-3-ol kommt danach vor allem in den Lamellen und in geringerem Maße im Stiel vor. Zur analytischen Bestimmung von 1-Octen-3-ol werden die Champignons geschält, zerkleinert und dann mit Pentan extrahiert. Die Herstellung von Pilzaroma wird hier nicht beschrieben.

US-PS 2 761 246 beschreibt die fermentative Zucht von Speisepilzen. Dabei wird in 3 Stufen fermentiert, wobei am Ende der ersten Stufe für eine gute Verteilung des Pilzmyzels gesorgt werden muß. Pilzmyzelpellets werden deshalb mit einem Mikrohomogenisator zerschlagen, bevor mit dem Produkt der nächste Ansatz angeimpft werden kann. Pilzaromen in Pilzzellmassen werden hier nicht hergestellt.

Nach J. B. Klis, Food Processing 1963, 99-101, können Pilzaromen aus fermentativ gezüchteten Speisepilzen hergestellt werden. Diese Produkte weisen jedoch nur einen geringen Gehalt an 1-Octen-3-ol auf. Nach A. Ginterova, Folia Mikrobiol. 18, 1973, 277-280, war deshalb der Erfolg dieser Produkte auf dem Markt (z. B. als Morel Mushroom Flavoring in den USA) nur gering.

Aufgabe der vorliegenden Erfindung ist es, ein Pilzaroma in Pilzzellmassen mit einem hohen Gehalt an natürlichem 1-Octen-3-ol aus fermentativ gezüchteten Speisepilzen herzustellen.

Die Aufgabe wird erfindungsgemäß dadurch gelöst, daß man das gezüchtete Speisepilzmyzel oder dessen wäßrige Suspension mit 10 bis 200 g/l Trockenmasse 0,1 bis 120 Sekunden bei 15 bis 40 °C unter aeroben Bedingungen unter Scherwirkung bei einem Gesamtenergieeintrag von 0,1 bis 20 kWh/m³ mechanisch behandelt und dann das Myzel oder den aus dem Myzel gewonnenen Preßsaft nach bekannten Methoden aufkonzentriert und ggf. haltbar macht.

Für die Herstellung von Pilzaroma werden Pilzzellmassen von Speisepilzen wie zum Beispiel Morchella esculenta, Morchella crassa, Morchella hortensis, Morchella conica, Pleurotus ostreatus, Lentinus edodes, Corpinus comatus oder Agaricus bisporus eingesetzt. Speisepilze im Sinne dieser Erfindung sind die Pilze, die unter den hier beschriebenen Bedingungen in toxikologischer Hinsicht unbedenkliche Aromaprodukte liefern.

Vorzugsweise werden Speiselpilze der Gattung Morchella verwendet.

Die gezüchteten Pilzzellmassen werden geerntet und dann einer Scherkraftbehandlung unterworfen, die satzweise oder im kontinuierlichen Betrieb durchgeführt werden kann.

Bei einem Energieeintrag von weniger als 0,1 kWh/m³ ist die Scherwirkung zu gering. Bei einem Energieeintrag von über 20 kWh/m³ tritt unnötige Erwärmung der Pilzzellmassen auf. Vorzugsweise beträgt der Energieeintrag 1 bis 10 kWh/m³.

Bei einer Trockenmassen von unter 10 g/l ist die Wassermenge, die nach der mechanischen Behandlung verdampft werden muß, unwirtschaftlich hoch. Bei über 200 g/l Trockenmasse liegt ein hochviskoser Brei oder eine stichfeste Masse vor, die schwierig zu handhaben ist.

Bei Behandlungszeiten von unter 0,1 Sekunden ist der Homogenisierungseffekt zu gering. Bei über 120 Sekunden erwärmt sich die Masse zu stark.

Für diese Behandlung geeignete Geräte sind beispielsweise:

- Rührgefäße, in denen Messerbalken mit hoher Drehzahl umlaufen (z. B. Messermühle),

- Rührwerke mit ineinander laufenden Zahnkränzen mit engen Spalten, in denen das zu behandelnde Gut vertikal in das Scherfeld gefördert wird (z. B. Ultra-Turrax), und

- Geräte mit auf einer horizontalen Welle angeordneten Zahnkränzen mit Spalten, die das Produkt mit hoher Frequenz Scher-und Druckwechselfeldern aussetzen (z. B. Supratron).

Das mechanisch behandelte Speisepilzmyzel kann direkt getrocknet und dann zu einem Pilzpulver vermahlen werden. Zur Trocknung sind übliche Trocknungsgeräte, wie zum Beispiel Bandtrockner, Hordentrockner, Lyophilisator und Sprühtrockner, geeignet.

Aus dem scherkraftbehandeltem Pilzmyzel kann man auch einem Preßsaft abpressen und daraus durch Wasserentzug nach üblichen Methoden einen Pilzextrakt (weitgehender Wasserentzug) oder ein Pilzkonzentrat (vollständiger Wasserentzug) herstellen.

Zur Verbesserung von Haltbarkeit, Geschmack, Rieselfähigkeit oder von anderen anwendungstechnischen Eigenschaften können auch, vorzugsweise vor der Trocknung, Antioxidanzien wie Ascorbinsäure, Salze, Trägermaterialien wie Maltodextrin oder andere Hilfsstoffe zugesetzt werden.

Man kann die fermentative Züchtung der Pilzzellmasen in 1. Stufe in einem Erlenmeyerkolben beginnen, indem man dort eine Nährlösung mit Pilzzellen beimpft und dann den Kolben auf einer Schüttelmaschine schüttelt. Die dabei erhaltenen Pilzzellmassen können dann im Sinne einer Impflinie als Impfmaterial für einen größeren Ansatz (2. Stufe) dienen, wobei dieser größere Ansatz wiederum das Impfmaterial für die eigentliche Zucht von Pilzmyzel in einem großen Fermenter (3. Stufe) mit zum Beispiel 100 m³ Arbeitsvolumen liefert.

Bei mehrstufigen Fermentationen ist es wichtig, daß das für die folgende Stufe gezüchtete Impfgut feinverteilt und locker und nicht als kompakte Pellets vorliegt. Es ist deshalb günstig, wenn man die fermentative Zucht in mindestens einer Stufe in Gegenwart von oberflächenaktiven Stoffen durchführt.

Vorzugsweise werden diese oberflächenaktiven Stoffe in der ersten und zweiten Stufe oder nur in der ersten Stufe zugesetzt. In großen Fermentern ist eine Zugabe von oberflächenaktiven Stoffen oft nicht erforderlich.

Die oberflächenaktiven Stoffe werden vorzugsweise in Konzentrationen von 0,02 bis 1 % und besonders bevorzugt in Konzentrationen von 0,05 bis 0,5 %, bezogen auf das Nährmedium, eingesetzt.

Geeignete Zusätze sind vorzugsweise physiologisch unbedenkliche, natürliche oder von Naturprodukten hergeleitete oberflächenaktive Mittel. Beispiele dafür sind:
- Mono-und Diglyceride von gesättigten und ungesättigten Speisefettsäuren mit ggf. geringen Anteilen an Alkalistearat,
- Essigsäure-, Milchsäure-und Citronensäureester der Mono-und Diglyceride von Speisefettsäuren,
- Diacetylweinsäureester der Mono-und Diglyceride von Speisefettsäuren,
- Stearoyllactyl-2-lactate,
- Fett-und Fettsäureprodukte, wie z. B. Distelöl, Mohnöl, Leinöl, Erdnußöl, Stearinsäure, Palmitinsäure und Ölsäureethylester.

Die Nährlösung enthält im allgemeinen eine Kohlenstoffquelle, wie zum Beispiel einen Zucker, eine Stickstoffquelle, beispielsweise ein Ammoniumsalz, einige anorganische Salze und einen Träger von Vitaminen und Spurenelementen, wie zum Beispiel Maisquellwasser.

Vor der Beimpfung werden die Nährlösung und der oberflächenaktive Stoff sterilisiert, was vorzugsweise thermisch erfolgt. Dadurch wird gewährleistet, daß bei der Fermentation nur Zellmassen des eingeimpften Pilzes gebildet werden.

Die fermentative Zucht von Speisepilzen ist ein aerober Prozeß und wird deshalb unter Belüftung durchgeführt. Die Temperatur beträgt im allgemeinen 20 bis 40 °C, die Fermentationslösung ist neutral oder schwach sauer.

Die Zugabe von physiologisch unbedenklichen oberflächenaktiven Stoffen behindert die Fermentation nicht. Die Pilzzellmassen fallen feinverteilt oder in Form kleiner, lockerer Flöckchen an und können direkt als Impfgut für die nächste Fermentationsstufe eingesetzt werden. Es ist nicht erforderlich, feste Myzelpellets mit Hilfe eines Gewebehomogenisators (vgl. US-PS 2 761 246) zu zerschlagen, um viele "Kristallisationskeime" zu erzeugen.

Durch die oberflächenaktiven Stoffe wird die Fermentation vereinfacht. Die durch einen Gewebehomogenisator bedingte teilweise Zellabtötung wird ausgeschlossen. Außerdem wird die Gefahr einer Kontamination durch einen zusätzlichen Verfahrensschritt sicher vermieden.

Das erfindungsgemäße Verfahren liefert ein Pilzaroma in Pilzzellmassen mit mehr als 700 ppm natürlichem 1-Octen-3-ol. Wird das im Scherfeld behandelte Pilzmyzel direkt getrocknet, erhält man im allgemeinen Pilzprodukte mit einem Gehalt von 800 bis 3 000 ppm 1-Octen-3-ol, bezogen auf die Trockenmassen.

Gewinnt man zunächst einen Preßsaft und stellt daraus Extrakte oder Konzentrate her, so werden Gehalte von 1 500 bis 6 000 ppm 1-Octen-3-ol, bezogen auf die Trockensubstanz, erreicht.

Die folgenden Beispiele sollen die Erfindung verdeutlichen.

Beispiel 1

Einstufige Fermentation: In einem 12 l-Fermenter mit Blattrührer und Belüftungsvorrichtung werden 7,8 l Nährlösung und 8 ml Distelöl gegeben. Die Nährlösung enthält pro Liter

20 g Glucose
10 ml Maisquellwasser
2 g $(NH_4)_2$ $SO_4$
0,875 g $KH_2$ $PO_4$
0,125 g $K_2H$ $PO_4$
0,5 g $Mg$ $SO_4$ $7$ $H_2O$
0,1 g NaCl
0,1 g $CaCl_2$ $2$ $H_2O$
1 ml Spurenlösung

Die Spurenlösung enthält pro Liter
10 g $FeSO_4$ $7$ $H_2O$
1 g $MnSO_4$ $1$ $H_2O$
1 g $ZnSO_4$ $7$ $H_2O$
50 mg $CuSO_4$ $5$ $H_2O$

Durch Erhitzen auf 121 °C bei einer Haltezeit von 45 Minuten wird sterilisiert. Anschließend wird bei 25 °C mit 0,2 l Inoculum des Pilzes Morchella esculenta angeimpft.

Zuchtbedingungen:

Belüftung 0,5 vvm 1)
Rührerdrehzahl 300 Upm
Temperatur 25 °C
pH-Wert 6,0 (durch Zusatz von $NH_3$-Wasser konstant gehalten)

Nach dreitägiger Fermentation enthält die Kulturbrühe Pilzmyzel mit einer Trockenmasse von 12 g/l in Form kleiner Flocken. Das Pilzmyzel wird abfiltriert und mit etwas Wasser gewaschen. Das Produkt wird dann 1 Minute bei 25 bis 30 °C mit einer Messermühle (Multimix MX 32 von Braun) mechanisch behandelt. Das so behandelte Pilzmyzel wird gefriergetrocknet und dann pulverisiert.
Ausbeute: 95 g Pilzprodukt mit 900 ppm 1-Octen-3-ol.

Beispiel 2

Es wird wie in Beispiel 1 verfahren. Nach der mechanischen Behandlung des Pilzmyzels wird jedoch Preßsaft mit einer hydraulischen Presse bei 50 bar abgepreßt. Der Preßsaft wird gefriergetrocknet.
Ausbeute: 30 g Pilzprodukt mit 2 200 ppm 1-Octen-3-ol.

Vorgleichsbeispiel A

Es wird wie in Beipiel 1 verfahren. Nach beendeter Züchtung wird jedoch ohne mechanische Behandlung sofort getrocknet.
Ausbeute: 97 g Pilzprodukt mit 85 ppm 1-Octen-3-ol.

1) vvm = Liter Luft pro Liter Reaktionsvolumen und Minute

4

Beispiel 3

Man verfährt wie in Beispiel 1, verwendet jedoch den Speisepilz Morchella crassa und setzt statt Distelöl 40 g Mohnöl zu. Nach dreitägiger Fermentation weist das Myzel eine Trockenmasse von 11 g/l auf. Ausbeute: 85 g Pilzprodukt mit 800 ppm 1-Octen-3-ol.

Beispiel 4

Man verfährt wie in Beispiel 2, verwendet jedoch den Speisepilz Morchella hortensis und setzt statt Distelöl 40 g Leinöl zu. Nach beendeter Fermentation weist das Myzel eine Trockenmasse von 12 g/l auf. Ausbeute: 25 g Pilzprodukt mit 2 400 ppm 1-Octen-3-ol.

Beispiele 5 bis 11

Diese Beispiele belegen, daß durch Zusatz der oberflächenaktiven Stoffe das Wachstum des Speisepilzmyzels nicht beeinträchtigt wird, das Produkt jedoch in einer günstigen, lockeren Form anfällt.

In einen 2 l-Kolben werden 250 ml Nährlösung von Beispiel 1 gegeben. Man setzt einen oberflächenaktiven Stoff zu, sterilisiert und impft anschließend mit 5 ml Inoculum Morchella esculenta an. Nach viertägiger Inkubation auf einer Schüttelmaschine bei 27 °C werden die in Tabelle 1 zusammengefaßten Ergebnisse erhalten.

Tabelle 1

| Beispiel | oberflächenaktives Mittel | Myzel-dispersizität | Trocken-masse |
|---|---|---|---|
| 5 | - | wenige große Myzelpellets | 2,4 g |
| 6 | 0,25 ml Distelöl | viele kleine Myzelflocken | 2,5 g |
| 7 | 1,25 g Mohnöl | " | 2,4 g |
| 8 | 1,25 g Leinöl | " | 2,6 g |
| 9 | 1,25 g Ölsäureethylester | " | 2,8 g |
| 10 | 1,25 g Palmitinsäure | " | 2,3 g |
| 11 | 0,25 g Diacetylweinsäure-ester der Mono- und Diglyceride von Speisefettsäuren (DATAMULS[R] 4820 von Th. Goldschmidt, D-4300 Essen) | " | 2,5 g |

## Ansprüche

1. Verfahren zur Herstellung von Pilzaroma in Pilzzellmassen, die einen hohen Gehalt an natürlichem 1-Octen-3-ol aufweisen, aus fermentativ gezüchtetem Speisepilzmyzel,
dadurch gekennzeichnet,
daß man
die gezüchteten Pilzzellmassen oder deren wäßrige Suspensionen mit 10 bis 200 g/l Trockenmasse 0,1 bis 120 Sekunden bei 15 bis 40 °C unter aeroben Bedingungen unter Scherwirkung bei einem Gesamtenergieeintrag von 0,1 bis 20 kWh/m$^3$ mechanisch behandelt und dann das Myzel oder den aus dem Myzel gewonnenen Preßsaft nach bekannten Methoden konzentriert.

2. Verfahren nach Anspruch 1,
dadurch gekennzeichnet,
daß der Energieeintrag 1 bis 10 kWh/m$^3$ beträgt.

3. Verfahren nach Anspuch 1,
dadurch gekennzeichnet,
daß man das Pilzaroma aus Speisepilzmyzel der Gattung Morchella herstellt.

4. Verfahren nach Anspruch 1,
dadurch gekennzeichnet,
daß man die Pilzzellmassen mit scherkrafterzeugenden Dispergiergeräten behandelt.

5. Verfahren nach Anspruch 1,
dadurch gekennzeichnet,
daß man die fermentative Züchtung des Speisepilzmyzels in mindestens einer Stufe in Gegenwart von oberflächenaktiven Stoffen durchführt.

6. Verfahren nach Anspruch 5,
dadurch gekennzeichnet,
daß man die erste oder die erste und zweite Stufe der Fermentation in Gegenwart oberflächenaktiver Stoffe durchführt.

7. Verfahren nach Anspruch 5,
dadurch gekennzeichnet,
daß man als oberflächenaktive Stoffe natürliche Öle, Fette, Fettsäuren und/oder Fettsäureester in Konzentrationen von 0,02 bis 1 %, bezogen auf die Nährlösung, zusetzt.

8. Verfahren nach Anspruch 7,
dadurch gekennzeichnet,
daß man, bezogen auf die Nährlösung, 0,05 bis 0,5 % oberflächenaktive Stoffe zusetzt.

9. Verfahren nach Anspruch 7,
dadurch gekennzeichnet,
daß man Distelöl zusetzt.

10. Verfahren nach Anspruch 1,
dadurch gekennzeichnet,
daß man vor der Konzentrierung Antioxidanzien und/oder Trägermaterialien zusetzt.